**Europäisches Patentamt**

**European Patent Office**

**Office européen des brevets**

(19)

(11) **EP 1 286 487 A1**

(12) **EUROPÄISCHE PATENTANMELDUNG**

(43) Veröffentlichungstag:
   **26.02.2003 Patentblatt 2003/09**

(51) Int Cl.$^7$: **H04J 13/00**

(21) Anmeldenummer: **01440273.9**

(22) Anmeldetag: **20.08.2001**

(84) Benannte Vertragsstaaten:
   **AT BE CH CY DE DK ES FI FR GB GR IE IT LI LU
   MC NL PT SE TR**
   Benannte Erstreckungsstaaten:
   **AL LT LV MK RO SI**

(71) Anmelder: **ALCATEL
   75008 Paris (FR)**

(72) Erfinder: **Pfeiffer, Thomas, Dr.
   70569 Stuttgart (DE)**

(74) Vertreter: **Menzietti, Domenico, Dipl.-Ing et al
   Alcatel
   Intellectual Property Department, Stuttgart
   70430 Stuttgart (DE)**

(54) **Kaskadierte optische Filter**

(57)   Es ist eine Aufgabe der Erfindung den technischen Aufwand bei der Implementierung von optischen Filtern zu reduzieren, die insbesondere zur Kodierung und Dekodierung von OCDM-Signalen verwendet werden. Ferner soll das Tuning erleichtert werden, um zum einen die benötigten Übertragungskanäle möglichst einfach selektieren zu können und zum anderen auf der Empfangsseite die Drifts der optischen Filter auf der Sendeseite für einen optimierten Empfang nachregeln zu können. Gelöst wird diese Aufgabe durch eine optische Filteranordnung beinhaltend ein erstes optisches Filter (F1) und ein zweites optisches Filter (F2), die in Reihe oder parallel geschaltet sind, und wobei das zweite optische Filter (F2) einen FSR Einstellbereich hat, das sich vom FSR Einstellbereich des ersten Filters (F1) unterscheidet. Vorteilhaft wird sich aus, dass mittels des zweiten optischen Filters (F2) ein Finetuning ermöglicht wird, wodurch insbesondere das Nachregeln von Drifts der optischen Filter auf der Sendeseite auf der Empfangseite vereinfacht wird.

Fig.1

EP 1 286 487 A1

**Beschreibung**

Die Erfindung betrifft eine optische Filteranordnung.

Optische Filter werden in optischen Systemen z.B. zur Kodierung und Dekodierung von optischen Signalen verwendet, so z.B. beim OCDM, das auch als OCDMA bezeichnet wird; OCDM = Optical Code Division Multiplex, OCDMA=Optical Code Division Multiple Access. OCDM basiert auf spektraler Kodierung von breitbandigen optischen Quellen. Das Licht einer mit zu übertragenden Daten modulierten LED wird beispielsweise durch ein optisches Filter geleitet und auf diese Weise kodiert; LED=Light Emitting Diode. Mehrere dieser LED und optische Filter Kombinationen werden auf der Sendeseite z.B. über einen optischen Koppler mit einem EDFA verbunden, der mit einer optischen Glasfaserleitung verbunden ist; EDFA=Erbium Doped Fibre Amplifier. Auf diese Art und Weise werden unterschiedlich kodierte optische Signale generiert, die gemeinsam verstärkt über die Glasfaser übertragen werden. Über optische Splitter kann eine Übertragung zu mehreren Empfangsseiten erfolgen. Jede Empfangsseite beinhaltet beispielsweise einen differentiellen Empfänger mit einem entsprechenden optischen Filter zur Dekodierung der für die Empfangsseite bestimmten optischen Signale.

Ein optisches Filter ist beispielsweise als Mach-Zehnder-Filter ausgeführt. Im Mach-Zehnder-Filter wird das empfangene OCDM-Signal über zwei Pfade weitergeleitet, die komplementäre Übertragungsfunktionen aufweisen. Das Mach-Zehnder-Filter kann sowohl zur Kodierung als auch zur Dekodierung von OCDM-Signalen verwendet werden.

Auf der Sendeseite werden z.B. pro optischem Übertragungskanal ein optisches Filter verwendet. Die optischen Filter müssen gegeneinander gut abgestimmt sein, um z.B. ein Übersprechen zu reduzieren. Auf der Empfangsseite wird z.B. ein optisches Filter verwendet, das auf den optischen Übertragungskanal abgestimmt wird, der für die Empfangsseite vorgesehen ist. Alternativ wird auf der Empfangsseite z.B. die gleiche Anzahl von optischen Filtern verwendet wie auf der Sendeseite. Die optischen Filter auf der Empfangsseite sind auf die optischen Filter auf der Sendeseite abgestimmt.

Es ist eine Aufgabe der Erfindung den technischen Aufwand bei der Implementierung von optischen Filtern zu reduzieren. Ferner soll das Tuning erleichtert werden, um zum einen die benötigten Übertragungskanäle möglichst einfach selektieren zu können und zum anderen auf der Empfangsseite die Drifts der optischen Filter auf der Sendeseite für einen optimierten Empfang nachregeln zu können.

Gelöst wird diese Aufgabe durch eine optische Filteranordnung beinhaltend ein erstes optisches Filter und ein zweites optisches Filter, die in Reihe oder parallel geschaltet sind, und wobei das zweite optische Filter einen FSR Einstellbereich hat, das sich vom FSR Einstellbareich des ersten Filters unterscheidet.

Vorteilhaft wirkt sich aus, dass mittels des zweiten optischen Filters ein Finetuning ermöglicht wird, wodurch insbesondere das Nachregeln von Drifts der optischen Filter auf der Sendeseite auf der Empfangseite vereinfacht wird.

Ferner werden in einem optischen System insgesamt weniger verschiedene, optische Filtertypen zur Generierung einer vorgegebenen Anzahl von optischen Übertragungskanälen benötigt. Verglichen zum Stand der Technik können mit der gleichen Anzahl von optischen Filtern deutlich mehr optische Übertragungskanäle generiert werden. Zudem können auf einfache Art und Weise komplexe Spektren generiert werden.

Die optische Filteranordnung kann auf einer hybriden opto-elektronischen integrierten Schaltung platziert werden und auf diese Weise baulich sehr platzsparend eingesetzt werden.

In einer vorteilhaften Ausgestaltung unterscheiden sich die FSR Einstellbereiche des ersten und des zweiten optischen Filters mindestens um den Faktor zehn voneinander. Das erste optische Filter ist z.B. als Mach-Zehnder-Filter oder als AWG-Filter ausgeführt und das zweite optische Filter z.B. als Mach-Zehnder-Filter oder als AWG-Filter; AWG = Arrayed Waveguide Grating.

Bei einer weiteren vorteilhaften Ausgestaltung ist mindestens ein drittes optisches Filter in Reihe oder parallel zum ersten oder zum zweiten optischen Filter geschaltet. Der FSR Einstellbereich des mindestens dritten optischen Filters kann gleich oder unterschiedlich zum FSR Einstellbereich des ersten oder zweiten optischen Filters sein. Die Anzahl von optischen Übertragungskanälen kann erhöht werden. Die Kodierung kann mit weniger Filtern erfolgen und das Nachregeln durch Feintuning wird erleichtert. Die FSR Einstellbereiche des ersten, des zweiten und des dritten optischen Filters unterscheiden sich untereinander z.B. mindestens um den Faktor zehn.

Bei einer weiteren vorteilhaften Ausgestaltung der Erfindung sind das erste und das zweite optische Filter parallel geschaltet und die Filterfunktionalität vom zweiten Filter ist im ersten Filter integriert. Auf diese Weise sind beispielsweise neue Bauelemente generierbar, so z.B. ein AWG-Filter beinhaltend mindestens drei parallel geschaltete optische Zweige, wobei jeder optische Zweig ein anderen FSR Einstellbereich aufweist. Die optischen Zweige sind beispielsweise als optische Verzögerungsstrecken ausgebildet, wobei jede Verzögerungsstrecke eine anderen Wert der Verzögerungszeit aufweist.

Das erste und das zweite optische Filter sind jeweils z.B. als Filter mit periodischer Übertragungsfunktion, z. B. als FIR-Filter, ausgeführt.

Beim Aufbau eines optischen Systems kann auf der Sendeseite mindestens eine optische Sendeeinrichtung beinhaltend mindestens eine erfindungsgemäße optische Filteranordnung zur Kodierung von optischen Signalen verwendet werden. Durch die Verwendung einer Vielzahl von erfindungsgemäßen optischen Filteranordnungen auf der Sendeseite, die parallel geschaltet sind und deren Ausgänge über mindestens einen optischen Kombiner gekoppelt sind zwecks Übertragung des überlagerten Signals über eine optische Glasfaserleitung können eine Vielzahl von kodierten Signalen generiert werden, die gleichzeitig übertragen werden können.

Ebenso kann beim Aufbau eines optischen Systems auf der Empfangsseite mindestens eine optische Empfangseinrichtung beinhaltend mindestens eine optische erfindungsgemäße Filteranordnung zur Dekodierung von optischen Signalen verwendet werden. Durch die Verwendung einer Vielzahl von erfindungsgemäßen optischen Filteranordnungen auf der Empfangsseite, die parallel geschaltet sind und deren Eingänge über mindestens einen optischen Splitter gekoppelt sind zwecks Empfang eines überlagerten optischen Signals über eine optische Glasfaserleitung können eine Vielzahl von Signalen gleichzeitig dekodiert werden.

Vorteilhafte Ausgestaltungen sind den abhängigen Ansprüchen und der nachfolgenden Beschreibung zu entnehmen.

Im folgenden wird die Erfindung anhand von zwei Ausführungsbeispielen und unter Zuhilfenahme von sechs Figuren erläutert. Es zeigen:

Fig. 1    eine schematische Darstellung einer ersten erfindungsgemäßen optischen Filteranordnung,

Fig. 2    eine numerische Simulation einer zusammengesetzten Übertragungsfunktion für die optische Filteranordnung aus Fig. 1,

Fig. 3    eine weitere numerische Simulation einer zusammengesetzten Übertragungsfunktion für die optische Filteranordnung aus Fig. 1,

Fig. 4    eine schematische Darstellung einer zweiten erfindungsgemäßen optischen Filteranordnung,

Fig. 5    eine numerische Simulation einer zusammengesetzten Übertragungsfunktion für die optische Filteranordnung aus Fig. 4,

Fig. 6    eine weitere numerische Simulation einer zusammengesetzten Übertragungsfunktion für die optische Filteranordnung aus Fig. 4.

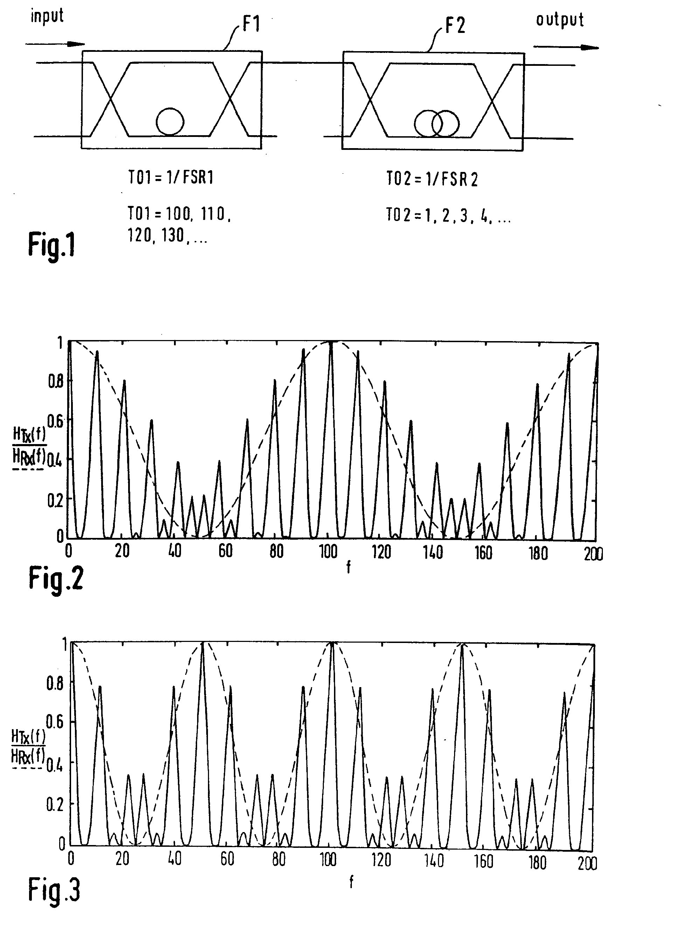

Das erste Ausführungsbeispiel wird nun unter Zuhilfenahme von Fig. 1 bis 3 erläutert. Fig. 1 zeigt eine erfindungsgemäße optische Filteranordnung. Die optische Filteranordnung beinhaltet zwei in Reihe kaskadierte optische Filter F1, F2. Beide Filter F1, F2 sind z.B. als Mach-Zehnder-Filter ausgeführt. Filter F1 hat einen FSR Einstellbereich, der sich vom FSR Einstellbereich des Filters F2 unterscheidet; FSR = Free Spektral Range.

FSR wird über die Periode T0=1/FSR definiert. Für Filter F1 gilt

$$T01 = 1/FSR1, \text{ für Filter F2 } T02 = 1/FSR2.$$

Die optischen Filter F1 und F2 sind beispielsweise jeweils als Filter mit periodischer Übertragungsfunktion, FIR- oder IIR-Filter, ausgeführt. Ein Filter hat eine Übertragungsfunktion H(ν) gleich:

$$H(\nu) = \frac{1}{2}\{1 + \cos[2\pi\nu T_0]\}$$

Über T0 ist der FSR Einstellbereich und damit der optische Übertragungskanal einstellbar.

Bei der Zusammenschaltung der optischen Filter F1 und F2 entsteht die zusammengesetzte Übertragungsfunktion H(ν) = $H_{T01}(\nu)$ x $H_{T02}(\nu)$ gleich:

$$H(\nu) = \frac{1}{4}\left\{1 + \cos[2\pi\nu\,T_{01}] + \cos[2\pi\nu\,T_{02}] + \frac{1}{2}\cos[2\pi\nu\,(T_{01} - T_{02})] + \frac{1}{2}\cos[2\pi\nu\,(T_{01} + T_{02})]\right\}$$

Jeder der Cosinus-Terme kann prinzipiell für die Kodierung und Dekodierung genutzt werden, allein oder in Kombination. Somit stehen die Terme

T01, T02, T01-T02 und T01+T02

zur Kodierung und Dekodierung zur Verfügung.

Bei der Verwendung von T01-T02 können bereits geringe Veränderungen einer Größe große Auswirkungen auf die Gesamtgröße haben, z.B.

T01 = 100ps, T02 = 90ps, T01-T02 = 10ps,

Veränderung von T01 um 10% nach oben resultiert in T01-T02=20ps, was eine Veränderung um 100% bedeutet.

Bei der Verwendung von T01+T02 werden z.B. Filter mit sehr unterschiedlichen FSR verwendet, z.B. T01 = 100, 120, 140, 160, ... ps und T02=12, 14, 16, 18, ... ps. Damit sind optische Überragungskodes bildbar, die auf der Summe T01+T02 basieren und folgende Werte haben können:

T01+T02=112, 114, 116,..., 132, 134, 136, ... ps.

Auf der Sendeseite werden dann z.B. zwei in Reihe geschaltete Mach-Zehnder-Filter verwendet und auf der Empfangsseite ein Mach-Zehnder-Filter.

Durch die Zusammenschaltung der beiden Filter F1 und F2 sind nun zahlreiche Kombinationsmöglichkeiten gegeben. Es können zahlreiche optische Übertragungskanäle generiert werden.

Für Filter F1 gilt z.B. T01 = 100, 110, 120, 130, ... .

Für Filter F2 gilt z.B. T02=1, 2, 3, 4, 5, ... .

Beispiel für T0kombinert=101, 102, 103, ..., 109, 110, 111, 112, ..., 131, 132, ... .

Sind beispielsweise pro Filter zehn Perioden einstellbar, so können unter Verwendung von zwei unabhängigen Filtern zwanzig Perioden und damit zwanzig Übertragungskanäle generiert werden. Unter Verwendung der erfindungsgemäßen Zusammenschaltung von zwei Filtern können zehn mal zehn gleich einhundert Übertragungskanäle generiert werden. Dies entspricht einer Verfünffachung der generierbaren Übertragungskanäle.

Ferner wird bei der Verwendung von zwei unabhängigen Filtern, z.B. zur Generierung von zwanzig Übertragungskanälen im Bereich von T0=100 bis 290 in Zehner-Stufen insbesondere das Nachregeln erschwert. Bei Verwendung der erfindungsgemäßen Zusammenschaltung von zwei Filtern ist insbesondere ein Feintuning mittels des zweiten Filters möglich. Bei Generierung von z.B. zwanzig Übertragungskanälen im Bereich von T0=100 bis 190 in Fünfer-Stufen kann durch das zweite Filter auf einfache Art und Weise z.B. in Einer-Schritten nachgeregelt werden.

Die optischen Filter F1 und F2 können sowohl bei der Kodierung als auch bei der Dekodierung eingesetzt werden, und somit sowohl auf der Sendeseite als auch auf der Empfangsseite.

Fig. 2 zeigt eine numerische Simulation einer zusammengesetzten Übertragungsfunktion für die optische Filteranordnung aus Fig. 1. Auf der Horizontalen ist die Frequenz in GHz aufgetragen, auf der Vertikalen die Übertragungsfunktion $H_{TX}(f)$ in durchgezogener Linie und die Übertragungsfunktion $H_{RX}(f)$ in gestrichelter Linie.

Die Übertragungsfunktion $H_{TX}(f)$ ist die zusammengesetzte Übertragungsfunktion.

Die Übertragungsfunktion $H_{RX}(f)$ ist der Teil der zusammengesetzten Funktion, der für die Kodierung verwendet wird, also z.B. T0ref=T01-T02.

Folgende Parameter sind gewählt:

T01 = 100 ps, T02 = 90 ps.

T0ref = 10 ps.

Fig. 3 zeigt eine weitere numerische Simulation einer zusammengesetzten Übertragungsfunktion für die optische Filteranordnung aus Fig. 1. Auf der Horizontalen ist die Frequenz in GHz aufgetragen, auf der Vertikalen die Übertragungsfunktion $H_{TX}(f)$ in durchgezogener Linie und die Übertragungsfunktion $H_{RX}(f)$ in gestrichelter Linie.

Die Übertragungsfunktion $H_{TX}(f)$ ist die zusammengesetzte Übertragungsfunktion.

Die Übertragungsfunktion $H_{RX}(f)$ ist der Teil der zusammengesetzten Funktion, der für die Kodierung verwendet wird, also z.B. T0ref=T01-T02.

Folgende Parameter sind gewählt:

T01 = 100 ps, T02 = 80 ps.

T0ref = 20 ps.

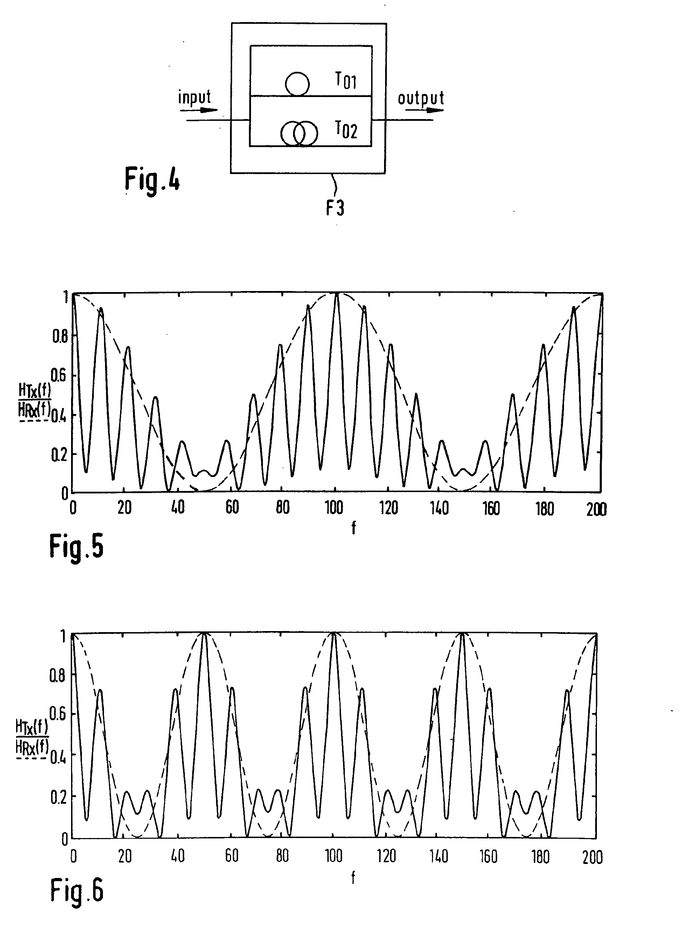

Das zweite Ausführungsbeispiel wird nun unter Zuhilfenahme von Fig. 4 bis 6 erläutert. Fig. 4 zeigt eine erfindungsgemäße optische Filteranordnung. Bei der optischen Filteranordnung F3 sind ein erstes und ein zweites optisches Filter parallel geschaltet und die Filterfunktionalität vom zweiten Filter ist im ersten Filter integriert. Auf diese Weise ist ein neues Bauelement generiert worden, so z.B. ein AWG-Filter beinhaltend mindestens drei parallel geschaltete optische Zweige, wobei jeder optische Zweig einen anderen Verzögerungswert aufweist.

Die Vorteile und die Auswahlmöglichkeiten der FSR sind wie zu Fig. 1 beschrieben analog bei der Filteranordnung aus Fig. 4 gegeben.

Fig. 5 zeigt eine numerische Simulation einer zusammengesetzten Übertragungsfunktion für die optische Filteranordnung aus Fig. 4. Auf der Horizontalen ist die Frequenz in GHz aufgetragen, auf der Vertikalen die Übertragungsfunktion $H_{TX}(f)$ in durchgezogener Linie und die Übertragungsfunktion $H_{RX}(f)$ in gestrichelter Linie.

Die Übertragungsfunktion $H_{TX}(f)$ ist die zusammengesetzte Übertragungsfunktion.

Die Übertragungsfunktion $H_{RX}(f)$ ist der Teil der zusammengesetzten Funktion, der für die Kodierung verwendet wird, also z.B. T0ref=T01-T02.

Folgende Parameter sind gewählt:

T01 = 100 ps, T02 = 90 ps.

T0ref = 10 ps.

Fig. 6 zeigt eine weitere numerische Simulation einer zusammengesetzten Übertragungsfunktion für die optische Filteranordnung aus Fig. 4. Auf der Horizontalen ist die Frequenz in GHz aufgetragen, auf der Vertikalen die Übertragungsfunktion $H_{TX}(f)$ in durchgezogener Linie und die Übertragungsfunktion $H_{RX}(f)$ in gestrichelter Linie.

Die Übertragungsfunktion $H_{TX}(f)$ ist die zusammengesetzte Übertragungsfunktion.

Die Übertragungsfunktion $H_{RX}(f)$ ist der Teil der zusammengesetzten Funktion, der für die Kodierung verwendet wird, also z.B. T0ref=T01-T02.

Folgende Parameter sind gewählt:

T01 = 100 ps, T02 = 80 ps.

T0ref = 20 ps.

Bei beiden Ausführungsbeispielen ist die Anzahl der Filter oder zumindest der Filterfunktionalitäten in einer erfindungsgemäßen optischen Filteranordnung gleich zwei. Anstelle von zwei optischen Filtern können in einer erfindungsgemäßen optischen Filteranordnung auch drei oder mehr optische Filter in Reihe geschaltet sein oder drei oder mehr optische Filter parallel geschaltet sein. In einer erfindungsgemäßen optischen Filteranordnung können auch vier oder mehr parallel Zweige vorgesehen sein zur Implementierung von drei oder mehr Filterfunktionalitäten. Es sind auch Kombinationen von Serien- und Parallelschaltungen von optischen Filtern und/oder Filterfunktionalitäten möglich. So können z.B. mehrere Mach-Zehnder-Filter und mehrere AWG-Filter in einer kombinierten Serien/Parallelkonfiguration zusammengeschaltet werden. Auch können Mach-Zehnder-Filter und AWG-Filter mit IIR-Filtern, z.B. Fabry-Perot Filtern kombiniert werden.

**Patentansprüche**

1. Optische Filteranordnung beinhaltend ein erstes optisches Filter (F1) und ein zweites optisches Filter (F2), die in Reihe oder parallel geschaltet sind, und wobei das zweite optische Filter (F2) einen FSR Einstellbereich hat, der sich vom FSR Einstellbereich des ersten Filters (F1) unterscheidet.

2. Optische Filteranordnung nach Anspruch 1, **dadurch gekennzeichnet, dass** sich die FSR Einstellbereiche des ersten (F1) und des zweiten (F2) optischen Filters mindestens um den Faktor zehn voneinander unterscheiden.

3. Optische Filteranordnung nach Anspruch 1, **dadurch gekennzeichnet, dass** das erste optische Filter (F1) als Mach-Zehnder-Filter oder als AWG-Filter ausgeführt ist und dass das zweite optische Filter (F2) als Mach-Zehnder-Filter oder als AWG-Filter ausgeführt ist.

4. Optische Filteranordnung nach Anspruch 1, **dadurch gekennzeichnet, dass** mindestens ein drittes optisches Filter in Reihe oder parallel zum ersten (F1) oder zum zweiten (F2) optischen Filter geschaltet ist.

5. Optische Filteranordnung nach Anspruch 1, **dadurch gekennzeichnet, dass** das erste und das zweite optische Filter parallel geschaltet sind und dass die Filterfunktionalität vom zweiten Filter im ersten Filter integriert ist.

6. Optische Filteranordnung nach Anspruch 1, **dadurch gekennzeichnet, dass** das erste (F1) und das zweite (F2) optische Filter jeweils als Filter mit periodischer Übertragungsfunktion ausgeführt ist.

7. Optische Sendeeinrichtung beinhaltend mindestens eine optische Filteranordnung nach Anspruch 1 zur Kodierung von optischen Signalen.

8. Optische Empfangseinrichtung beinhaltend mindestens eine optische Filteranordnung nach Anspruch 1 zur Dekodierung von optischen Signalen.

9. Optisches OCDM-System beinhaltend mindestens eine optische Sendeeinrichtung nach Anspruch 7 und mindestens eine Empfangseinrichtung nach Anspruch 8, die miteinander über optische Übertragungsleitungen mitein-

**EP 1 286 487 A1**

ander verbunden sind.

**10.** Optische Filteranordnung, insbesondere ein AWG-Filter (F3), beinhaltend mindestens drei parallel geschaltete optische Zweige, wobei jeder optische Zweig einen anderen Verzögerungswert aufweist.

**6**

input        F1                F2        output

$T01 = 1/FSR1$

$T01 = 100, 110, 120, 130, ...$

$T02 = 1/FSR2$

$T02 = 1, 2, 3, 4, ...$

**Fig.1**

$\dfrac{H_{Tx}(f)}{H_{Rx}(f)}$

**Fig.2**

$\dfrac{H_{Tx}(f)}{H_{Rx}(f)}$

**Fig.3**

Fig.4

Fig.5

Fig.6

## EP 1 286 487 A1

**Europäisches Patentamt**

**EUROPÄISCHER RECHERCHENBERICHT**

Nummer der Anmeldung

EP 01 44 0273

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | FARJADY F ET AL: "NOVEL TWO-STAGE WAVELENGTH-ROUTED ACCESS ARCHITECTURE EMPLOYING SPECTRAL-GROOMING AND REPLICATED ARRAYED WAVEGUIDE GRATINGS" 6TH IEE CONFERENCE ON TELECOMMUNICATIONS. EDINBURGH, UK, MARCH 29 - APRIL 1, 1998, IEE CONFERENCE PUBLICATION, LONDON: IEE, UK, Bd. NO. 451, 29. März 1998 (1998-03-29), Seiten 214-218, XP000880794 ISBN: 0-85296-700-4 * das ganze Dokument * | 1-10 | H04J13/00 |
| X | REJEAUNIER X ET AL: "A tunable mode-locked erbium-doped fibre laser using a Lyot-type tuner integrated in lithium niobate" OPTICS COMMUNICATIONS, NORTH-HOLLAND PUBLISHING CO. AMSTERDAM, NL, Bd. 185, Nr. 4-6, 15. November 2000 (2000-11-15), Seiten 375-380, XP004223699 ISSN: 0030-4018 * das ganze Dokument * | 1-4,6-9 | |
| A | MARHIC M E: "COHERENT OPTICAL CDMA NETWORKS" JOURNAL OF LIGHTWAVE TECHNOLOGY, IEEE. NEW YORK, US, Bd. 11, Nr. 5/6, 1. Mai 1993 (1993-05-01), Seiten 854-863, XP000396715 ISSN: 0733-8724 * Zusammenfassung; Abbildungen 1,3,8 * * Seite 855, linke Spalte * * Seite 857, linke Spalte * | 1,4,5, 7-10 | **RECHERCHIERTE SACHGEBIETE (Int.Cl.7)** H04J |

-/--

Der vorliegende Recherchenbericht wurde für alle Patentansprüche erstellt

| Recherchenort | Abschlußdatum der Recherche | Prüfer |
|---|---|---|
| DEN HAAG | 14. Februar 2002 | Fouasnon, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

9

## EUROPÄISCHER RECHERCHENBERICHT

**Europäisches Patentamt**

Nummer der Anmeldung

EP 01 44 0273

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | ANDONOVIC I ET AL: "INCOHERENT OPTICAL CODE DIVISION MULTIPLE ACCESS SYSTEMS" IEEE ISSSTA. IEEE INTERNATIONAL SYMPOSIUM ON SPREAD SPECTRUM TECHNIQUES AND APPLICATIONS, XX, XX, 1996, Seiten 424-430, XP000199099 * Zusammenfassung; Abbildung 1 * * Seite 425 * | 1,4,5, 7-10 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 14. Februar 2002 | Fouasnon, O |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)